# EUROPEAN PATENT APPLICATION

(11) **EP 3 885 837 A1**
(43) Date of publication of application: **29.09.2021**
(21) Application number: 21155315.1
(22) Date of filing: 04.02.2021
(51) Int. Cl.: G03G 15/00

(54) **IMAGE FORMING APPARATUS AND DISPLAY METHOD**

(30) Priority: 25.03.2020 JP 2020053991
(71) Applicant: Toshiba TEC Kabushiki Kaisha, Tokyo 141-8562 (JP)
(72) Inventor: Oka, Yuya, Shinagawa-ku, Tokyo 141-8562 (JP)
(74) Representative: Bandpay & Greuter

(57) **Abstract**

An image forming apparatus includes a printer unit, a display, and a display controller. The printer unit is configured to print an image on a sheet. The printer unit includes a target component. The display controller is communicable with the display. The display controller is configured to cause the display to display a first display element associated with replacement of the target component. The first display element is displayed based on a state of the printer unit. The display controller is also configured to cause the display to display a second display element associated with a warning for the printer unit. The second display element is displayed so as to at least one of block or hide a portion of the first display element. The second display element is displayed based on the state. The portion describes replacement of the target component.

## Description

### FIELD

Embodiments described herein relate generally to an image forming apparatus and a display method.

### BACKGROUND

In maintenance work of a multifunctional peripheral (MFP), a control panel of the MFP displays various reminders to a user. For example, the control panel displays an error warning regarding an error of the device. The maintenance work includes a work such as replacement of a consumable component in which a user touches a consumable component.

However, the control panel merely displays the reminder temporarily. If the user starts the replacement of the consumable component after ignoring or overlooking the reminder, a hand of the user may touch the consumable component such that the hand gets burned or receives an electric shock.

To this end, there is provided an image forming apparatus according to claim 1.

Preferably, the display controller is further configured to cause the display to display the second display element when the state does not satisfy a standard.

Preferably, the display controller is further configured to cause the display to cease display of the second display element when the state satisfies the standard.

Preferably, the image forming apparatus may further comprise a temperature sensor configured to sense a temperature of the target component.

Preferably, the standard is a temperature range;
Preferably, the state is the temperature; and
Preferably, the state satisfies the standard when the temperature is within the temperature range.

Preferably, the target component is a fixing assembly of the printer unit.

Preferably, a maximum of the temperature range is a burn temperature of skin.

Preferably, the display controller is further configured to cause the display to cease display of the first display element based on the state.

Preferably, the display controller is further configured to cause the display to cease display of the second display element based on the state.

Preferably, the display controller is further configured to cause the display to cease display of the first display element before causing the display to display the second display element.

Preferably, the display controller is further configured to cause the display to cease display of the second display element before causing the display to display the first display element.

Preferably, the display controller is further configured to cause the display to display a condition on the second display element.

Preferably, the display controller is further configured cause the display to cease display of the second display element after displaying the condition.

Preferably, the display is further configured to cause the display to display the second display element based on both the state and a kind of the target component.

The image forming apparatus may further comprise a determination unit communicable with the display and configured to compare the temperature of the target component to a temperature range, wherein the controller is further configured to cause the display to display the first display element when the temperature is within the temperature range; and cause the display to display the second display element when the temperature is not within the temperature range.

Preferably, the display unit is further configured to cause the display to cease display of the first display element when the temperature is not within the temperature range.

Preferably, cause the display to cease display of the second display element when the temperature is within the temperature range.

Preferably, the second display element is displayed so as to at least one of block or hide at least a portion of the first display element. Preferably, the portion describes replacement of the fixing assembly.

The present invention further relates to a display method for an image forming apparatus having a target component, a display, and a display controller, the display method comprising: causing, by the display controller, the display to display a first display element associated with replacement of the target component, the first display element displayed based on a state of the target component; and causing, by the display controller, the display to display a second display element associated with a warning for the target component, the second display element displayed so as to at least one of block or hide a portion of the first display element, the portion comprising at least one of text or an image associated with the target component, the second display element displayed based on the state.

The method may further comprise causing, by the display controller, the display to display the second display element when the state does not satisfy a standard.

The method may further comprise causing, by the display controller, the display to cease display of the second display element when the state satisfies the standard.

The method may further comprise causing, by the display controller, the display to cease display of the first display element based on the state.

The method may further comprise causing, by the display controller, the display to cease display of the second display element based on the state.

The method may further comprise causing, by the display controller, the display to cease display of the first display element before causing the display to display the second display element.

The method may further comprise causing, by the display controller, the display to cease display of the second display element before causing the display to display the first display element.

The method may further comprise causing, by the display controller, the display to display a condition on the second display element.

The method may further comprise causing, by the display controller, the display to cease display of the second display element after displaying the condition.

The method may further comprise causing, by the display controller, the display to display the second display element based on both the state and a kind of the target component.

### DESCRIPTION OF THE DRAWINGS

FIG. 1 is a schematic diagram illustrating an image forming apparatus according to an embodiment;
FIG. 2 is a block diagram illustrating a main circuit configuration of the image forming apparatus according to the embodiment;
FIG. 3 is a diagram illustrating a replacement component selection screen according to the embodiment;
FIG. 4 is a diagram illustrating a replacement guidance screen according to the embodiment;
FIG. 5 is a diagram illustrating a warning screen according to the embodiment; and
FIG. 6 is a flowchart illustrating a procedure of a display process in the image forming apparatus according to the embodiment.

### DETAILED DESCRIPTION

Embodiments described herein provide a technique of supporting component replacement of an image forming apparatus by a user.

An image forming apparatus according to one embodiment includes a display unit (display) and a display control unit (display controller). The display control unit is configured to cause the display unit to display a first display element (screen) regarding replacement of a target component. The display control unit is configured to change whether or not to cause the display unit to display a second display element (screen) regarding a warning of the target component in an aspect where the first display element is not operable depending on a state of the target component.

Hereinafter, embodiments will be described using the drawings. In addition, in each of the drawings used for the description of the embodiment, the scale of each of components may be appropriately changed. In addition, each of the drawings in the following embodiment may not illustrate a configuration for description.

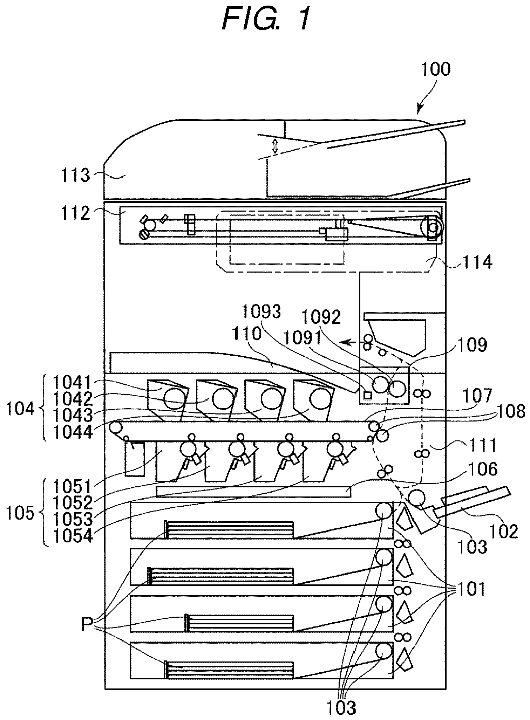

FIG. 1 is a schematic diagram illustrating an image forming apparatus 100.

The image forming apparatus 100 executes printing using an electrophotographic method. The image forming apparatus 100 is, for example, a MFP, a copying machine, a printer, or a fax machine. As illustrated in FIG. 1, the image forming apparatus 100 includes, for example, a paper feed tray 101, a manual feed tray 102, a paper feed roller 103, a toner cartridge 104, an image forming unit 105, an optical scanning device 106, a transfer belt 107, a transfer roller 108, a fixing unit 109 (fixing assembly), a paper discharge tray 110, a duplex unit 111, a scanner unit 112, a document feeder 113, and a control panel 114 (display).

The paper feed tray 101 accommodates an image forming medium P using printing.

The manual feed tray 102 is a tray for manually feeding the image forming medium P.

The paper feed roller 103 rotates along with movement of a motor such that the image forming medium P accommodated in the paper feed tray 101 or the manual feed tray 102 is discharged from the paper feed tray 101.

The toner cartridge 104 contains toner that is supplied to the image forming unit 105. The image forming apparatus 100 includes a plurality of toner cartridges 104. As illustrated in FIG. 1, the image forming apparatus 100 includes, for example, four toner cartridges 104 including a toner cartridge 1041, a toner cartridge 1042, a toner cartridge 1043, and a toner cartridge 1044. The toner cartridge 1041, the toner cartridge 1042, the toner cartridge 1043, and the toner cartridge 1044 contain toners corresponding to the respective colors of cyan, magenta, yellow, and key (black), respectively. The colors of the toners in the toner cartridges 104 are not limited to the respective colors of CMYK and may be other colors. In addition, the toner in the toner cartridge 104 may be a special toner. For example, the toner cartridge 104 may contain a decolorable toner that enters a state where the toner is erased and invisible at a temperature higher than a predetermined temperature.

The image forming unit 105 prints an image using an electrophotographic method. That is, the image forming unit 105 forms an image on the image forming medium P or the like using the toner. The image forming medium P is, for example, sheet-like paper. The image forming unit 105 includes a developing unit and a photoconductive drum. The developing unit develops an electrostatic latent image on a surface of the photoconductive drum using the toner supplied from the toner cartridge 104. As a result, a toner image is formed on the surface of the photoconductive drum. The image formed on the surface of the photoconductive drum is transferred (primarily transferred) to the transfer belt 107. The image forming apparatus 100 includes a plurality of image forming units 105. For example, as illustrated in FIG. 1, the image forming apparatus 100 includes four image forming units 105 including an image forming unit 1051, an image forming unit 1052, an image forming unit 1053, and an image forming unit 1054. The image forming unit 1051, the image forming unit 1052, the image forming unit 1053, and the image forming unit 1054 receive the toners corresponding to the respective colors of CMYK to form images.

The optical scanning device 106 is also called a laser scanning unit (LSU) or the like. The optical scanning device 106 forms an electrostatic latent image on the surface of the photoconductive drum of each of the image forming units 105 using laser light controlled based on image data. For example, the optical scanning device 106 includes laser units corresponding to the respective colors of CMYK. The respective laser units emit laser light. Each of the laser units controls emission of laser light based on a control signal corresponding to image data. In addition, each of the laser units modulates laser light based on a control signal corresponding to image data. The optical scanning device 106 includes, for example, a polygon mirror. The polygon mirror reflects laser light emitted from each of the laser units. The polygon mirror is rotated by a polygon motor to deflect each laser light.

The transfer belt 107 is, for example, an endless belt and is rotatable by movement of a roller. The transfer belt 107 rotates such that the image transferred from each of the image forming units 105 is conveyed to a position of the transfer roller 108.

The transfer roller 108 includes two rollers facing each other. The transfer roller 108 transfers (secondarily transfers) the image formed on the transfer belt 107 to the image forming medium P that passes through a gap between the transfer rollers 108.

The fixing unit 109 applies heat and pressure to the image forming medium P to which the image is transferred. As a result, the image transferred to the image forming medium P is fixed. The fixing unit 109 includes a heating roller 1091 and a pressurization roller 1092 facing each other.

The heating roller 1091 includes, for example, a heat source for heating the heating roller 1091. The heat source is, for example, a heater (e.g., electrical heater, resistance heater, heating coil, etc.). The roller heated by the heat source heats the image forming medium P.

The pressurization roller 1092 pressurizes the image forming medium P that passes through the gap between the pressurization roller 1092 and the heating roller 1091.

The fixing unit 109 includes a temperature sensor 1093. The temperature sensor 1093 measures a temperature of the fixing unit 109. For example, the temperature sensor 1093 measures a temperature of the heating roller 1091 or the vicinity of the heating roller 1091. In addition, the temperature sensor 1093 outputs temperature data.

The paper discharge tray 110 discharges the printed image forming medium P.

The duplex unit 111 makes the image forming medium P to enter a state where a back surface thereof is printable. For example, the duplex unit 111 inverts the image forming medium P upside down by switching back the image forming medium P using a roller or the like.

The scanner unit 112 reads an image from a document or the like on which the image is formed. The scanner unit 112 reads an image from a document. The scanner unit 112 corresponds to a scanner that reads an image from a document. The scanner is, for example, an optical reduction type including an imaging element such as a charge-coupled device (CCD) image sensor. Alternatively, the scanner is a contact image sensor (CIS) type including an imaging element such as a complementary metal-oxide-semiconductor (CMOS) image sensor. Alternatively, the scanner may be other suitable sensors or devices. The image forming apparatus 100 implements document copying by reading an image from a document using the scanner unit 112 and printing the read image on the image forming medium P using the image forming unit 105.

The document feeder 113 is also called an auto document feeder (ADF) or the like. The document feeder 113 conveys documents placed on a document tray one by one. An image of the conveyed document is read by the scanner unit 112. In addition, the document feeder 113 may include a scanner for reading an image from a back surface of the document.

The control panel 114 includes, for example, a button and a touch panel that are operated by a user of the image forming apparatus 100. In the touch panel, for example, a display such as a liquid crystal display or an organic electroluminescent (EL) display and a pointing device using a touch input are laminated. Accordingly, the button and the touch panel function as an input device that receives an operation of the user of the image forming apparatus 100. In addition, the display in the touch panel functions as a display device that notifies various information to the user of the image forming apparatus 100. The control panel 114 is an example of the display unit.

A main circuit configuration of the image forming apparatus 100 will be described.

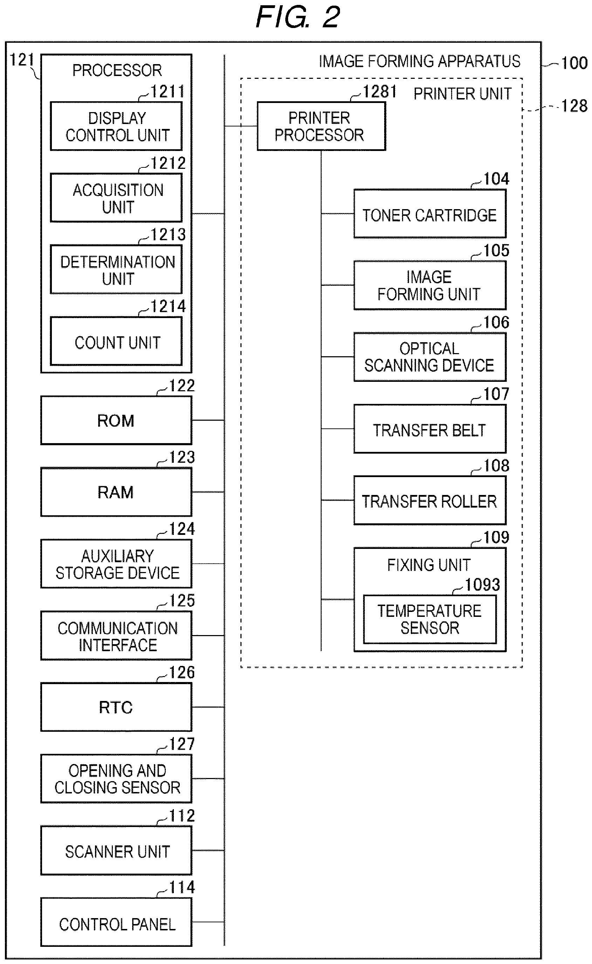

FIG. 2 is a block diagram illustrating the main circuit configuration of the image forming apparatus 100.

The image forming apparatus 100 includes, for example, a processor 121, a read-only memory (ROM) 122, a random-access memory (RAM) 123, an auxiliary storage device 124, a communication interface 125, a real-time clock (RTC) 126, an opening and closing sensor 127, a printer unit 128, the scanner unit 112, and the control panel 114.

The processor 121 corresponds to a central part of a computer that executes a process such as a calculation and a control required for an operation of the image forming apparatus 100. The processor 121 loads a program stored in the ROM 122, the auxiliary storage device 124, or the like to the RAM 123. The program causes the processor 121 of the image forming apparatus 100 to implement each of the units described below. The processor 121 executes various operations by executing programs loaded on the RAM 123. The processor 121 is, for example, a central processing unit (CPU), a micro processing unit (MPU), a system on a chip (SoC), a digital signal processor (DSP), a graphics processing unit (GPU), an application specific integrated circuit (ASIC), a programmable logic device (PLD), or a field-programmable gate array (FPGA). Alternatively, the processor 121 may be configured with a combination of the above-described examples.

The ROM 122 corresponds to a main memory of a computer including the processor 121 as a central part. The ROM 122 is a nonvolatile memory used solely for reading data. The ROM 122 stores the above-described programs. In addition, the ROM 122 stores data or various set values that are used for the processor 121 to execute various processes.

The RAM 123 corresponds to a main memory of a computer including the processor 121 as a central part. The RAM 123 is a memory used for reading and writing data. The RAM 123 is used as, for example, a so-called work area that temporarily stores data used for the processor 121 to execute various processes.

The auxiliary storage device 124 corresponds to an auxiliary storage device of the computer including the processor 121 as a central part. The auxiliary storage device 124 is, for example, an electric erasable programmable read-only memory (EEPROM), a hard disk drive (HDD), or a solid state drive (SSD). The auxiliary storage device 124 may also store the above-described programs. In addition, the auxiliary storage device 124 stores, for example, data used for the processor 121 to execute various processes, data generated during a process of the processor 121, or various set values. The image forming apparatus 100 may include an interface into which a storage medium such as a memory card or a universal serial bus (USB) memory can be inserted instead of the auxiliary storage device 124 or in addition to the auxiliary storage device 124.

The communication interface 125 is an interface used for the image forming apparatus 100 to communicate with the devices through a network or the like.

The RTC 126 is a clock, a circuit having a clock function, or the like.

The opening and closing sensor 127 detects that a cover configuring a housing of the image forming apparatus 100 is opened. The opening and closing sensor 127 outputs a signal representing that the cover is opened in response to detection that the cover is opened. The image forming apparatus 100 may include a plurality of opening and closing sensors 127 for the respective covers.

The printer unit 128 prints an image on the image forming medium P or the like based on image data. The printer unit 128 includes, for example, a printer processor 1281, the toner cartridge 104, the image forming unit 105, the optical scanning device 106, the transfer belt 107, the transfer roller 108, and the fixing unit 109.

In order to implement a printing function, the printer processor 1281 executes a process such as a calculation and a control required for a print operation of the image forming apparatus 100. The printer processor 1281 executes a process such as a calculation and a control required for a print operation based on an instruction or the like from the processor 121 and various programs. In addition, the printer processor 1281 outputs a process result or the like to the processor 121. Various programs may be stored in the storage unit such as the ROM 122 or the auxiliary storage device 124 or may be incorporated into the circuit of the printer processor 1281. Alternatively, the storage unit provided in the printer unit 128 may store various programs. The printer processor 1281 is, for example, a CPU, a MPU, a SoC, a DSP, a GPU, an ASIC, a PLD, or a FPGA.

Each of the units mounted on the above-described processor 121 will be described.

The processor 121 mounts a display control unit 1211 (display controller), an acquisition unit 1212 (acquisition controller), a determination unit 1213 (determination controller), and a count unit 1214 (count controller). Each of the units (controllers) mounted on the processor 121 can also be referred to as each of the functions. Each of the units being mounted on the processor 121 can also be referred to as "each of the units being mounted on the control unit including the processor 121, the ROM 122, and the RAM 123."

The display control unit 1211 is controlled to display various screens by the control panel 114. The screens will also be referred to as "display elements."

The acquisition unit 1212 acquires temperature data from the temperature sensor 1093.

The determination unit 1213 determines whether or not a state of a target component satisfies a standard. The target component that is selected by the user among components configuring the image forming apparatus 100 is a component to be replaced. Various consumable components configuring the image forming apparatus 100 may be target components. Here, the fixing unit 109 will be described using an example of the target component. The standard is a standard for classifying the state of the target component into any one of a state suitable for the replacement of the target component or a state not suitable for the replacement of the target component. The state of the target component that satisfies the standard corresponds to the state of the target component that is suitable for the replacement. The state of the target component that does not satisfy the standard corresponds to the state of the target component that is not suitable for the replacement. The state that is suitable for the replacement is a state that has no risk if the user replaces the target component. The state that is not suitable for the replacement is a state that has a risk if the user replaces the target component. The standard can be appropriately changed.

For example, a case where the target component is the fixing unit 109 will be described. The standard is a threshold relating to a temperature that is measured by the temperature sensor 1093 to classify the state of the fixing unit 109 into any one of a state suitable for the replacement of the fixing unit 109 or a state not suitable for the replacement of the fixing unit 109. The state that is suitable for the replacement of the fixing unit 109 is a state that has no risk of burns if the user replaces the fixing unit 109. The state that is not suitable for the replacement of the fixing unit 109 is a state that has a risk of burns at a high temperature if the user replaces the fixing unit 109. For example, if the temperature measured by the temperature sensor 1093 is lower than or equal to the threshold, the state of the fixing unit 109 is a state that satisfies the standard. If the temperature measured by the temperature sensor 1093 exceeds the threshold, the state of the fixing unit 109 is a state that does not satisfy the standard. The threshold can be appropriately changed.

The standard is not limited to the threshold relating to the temperature. The content of the standard may vary depending on the kind of the target component.

The count unit 1214 counts an elapsed time.

Some screen examples that are displayed by the control panel 114 will be described.

First, a replacement component selection screen will be described.

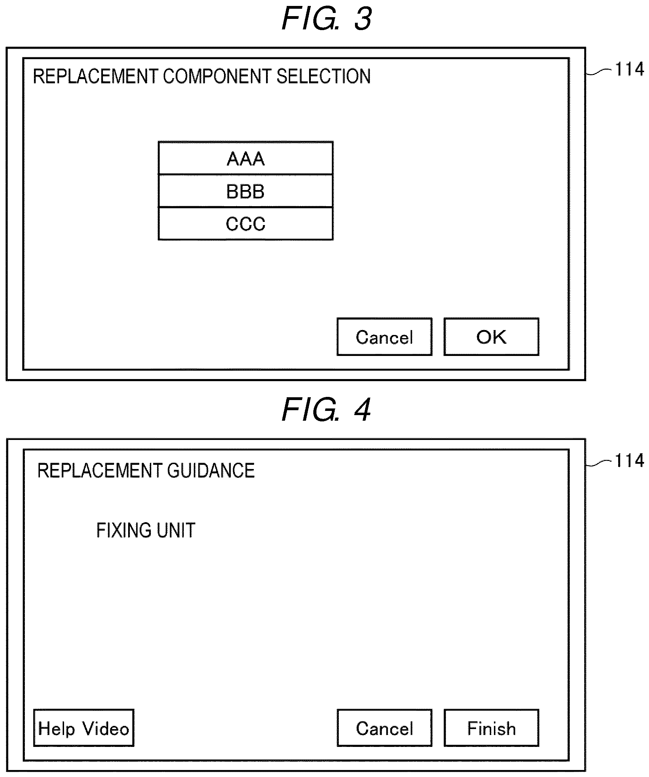

FIG. 3 is a diagram illustrating the replacement component selection screen.

The replacement component selection screen is a screen for selecting the target component.

The replacement component selection screen displays a list of a plurality of consumable components (consumable components "AAA," "BBB," and "CCC") belonging to a replacement period. The user can select the target component from the list on the replacement component selection screen by operating the control panel 114.

For example, the control panel 114 displays the replacement component selection screen based on a display request of the replacement component selection screen by the user through the control panel 114. In another example, the control panel 114 displays the replacement component selection screen based on detection that the cover is opened by the opening and closing sensor 127.

A "Cancel" button on the replacement component selection screen is a button for erasing the replacement component selection screen. The meaning of "being erased" includes "not being displayed" and "being closed." For example, if the user stops the replacement of the target component, the user presses the "Cancel" button.

An "OK" button on the replacement component selection screen is a button for confirming the target component. For example, if the user confirms the target component selected from the list, the user presses the "OK" button.

Next, the replacement guidance screen will be described.

FIG. 4 is a diagram illustrating the replacement guidance screen.

The replacement guidance screen is an example of a screen relating to the replacement of the target component. The screen relating to the replacement of the target component is a screen for completing the replacement of the target component. The screen relating to the replacement of the target component will also be referred to as a "first display element."

The control panel 114 displays a replacement guidance screen regarding the target component selected on the replacement component selection screen. The screen displayed by the control panel 114 is shifted from the replacement component selection screen to the replacement guidance screen based on the selection of the target component on the replacement component selection screen. For example, the control panel 114 displays the replacement guidance screen regarding the fixing unit 109. The user completes the replacement of the target component along the display of the replacement guidance screen.

A "Cancel" button on the replacement guidance screen is a button for returning to the replacement component selection screen. For example, if the user stops the replacement of the target component, the user presses the "Cancel" button.

A "Help Video" button on the replacement guidance screen is a button for displaying a two-dimensional code.

The two-dimensional code stores a uniform resource locator (URL) correlating to a video of a guidance for replacing the target component. For example, the user reads the two-dimensional code using a terminal such as a smartphone and accesses the URL to cause the terminal to display the video. The user can execute the replacement of the target component according to the guidance.

A "Finish" button on the replacement guidance screen is a button for completing the replacement of the target component. For example, the user presses the "Finish" button after physical replacement of the target component. For example, the image forming apparatus 100 executes an internal process following the physical replacement of the target component based on the pressing of the "Finish" button. For example, the internal process is a process of resetting the counter for the operating time of the target component to zero. As a result, the image forming apparatus 100 completes the replacement of the target component.

Next, a warning screen will be described.

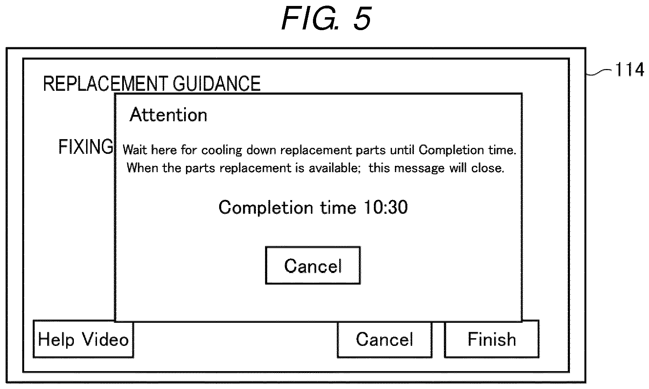

FIG. 5 is a diagram illustrating the warning screen.

The warning screen is an example of a screen relating to a warning of the target component. The screen relating to the warning of the target component is a screen for warning that the state of the target component is not suitable for the replacement. The screen relating to the warning of the target component will also be referred to as a "second display element."

The control panel 114 displays the warning screen in an aspect where the replacement guidance screen is not operable. The control panel 114 displays the warning screen so as to make the replacement guidance screen not operable. The control panel 114 displays the warning screen so as to inhibit an operation to the replacement guidance screen. For example, the aspect where the replacement guidance screen is not operable is an aspect where at least each of the buttons on the replacement guidance screen is not operable (for example, not active). For example, the warning screen is displayed so as to make at least each of the buttons on the replacement guidance screen not operable. For example, the control panel 114 displays the warning screen to be superimposed on the replacement guidance screen. The warning screen may cover a part or the entirety of the replacement guidance screen. The warning screen may block (obscure) at least a portion (first portion) of the replacement guidance screen while the apparatus is too dangerous to do the replacement. The warning screen may cover guidance contents on the replacement guidance screen to block a user's view of the guidance contents. Additionally or alternatively, at least a portion (second portion) of the replacement guidance screen is hidden while the warning screen is displayed. The portion of the replacement guidance screen that is blocked or hidden describes (illustrates) replacement of the target component (e.g., using text, using images, using text and images, etc.). The control panel 114 may display the warning screen in the aspect where the replacement guidance screen is not operable by erasing the replacement guidance screen and displaying the warning screen. As a result, the user cannot operate the replacement guidance screen. The meaning of "not operable" includes "non-usable." The meaning of "operable" includes "usable."

The warning screen displays a warning cancel condition. The warning cancel condition is a condition where the warning is canceled and the warning screen is erased. The condition where the warning screen is erased corresponds to a condition where the replacement guidance screen is operable. The condition where the warning screen is erased corresponds to a condition where the state of the target component is shifted from the state that is not suitable for the replacement to the state that is suitable for the replacement. The condition where the warning screen is erased corresponds to a condition where the state of the target component is shifted from the state that does not satisfy the standard to the state that satisfies the standard.

For example, the warning cancel condition is a period of time (hereinafter, also referred to as "completion period of time") required to erase the warning screen from a time at which the warning screen is displayed. The completion period of time is a recommended period of time required to shift the state of the target component from the state that does not satisfy the standard to the state that satisfies the standard. It is preferable that the completion period of time is a period of time with a margin (e.g., threshold, etc.). The completion period of time may be a predetermined period of time for each target component. The completion period of time may be a period of time having a length that varies depending on the state of the target component. The completion period of time may be a period of time having a length that varies in consideration of an environmental temperature (e.g., ambient temperature, etc.). The completion period of time can be appropriately changed.

In another example, the warning cancel condition is a time at which the warning screen is erased (hereinafter, also referred to as "completion time"), for example, "Completion time" shown in FIG. 5. The completion time is a time obtained by adding the completion period of time to the time at which the warning screen is displayed.

A case where the target component is the fixing unit 109 will be described. It is assumed that the warning cancel condition is the completion time. For example, the completion time is a time obtained by adding the completion period of time to the current time. The completion period of time is a recommended period of time required for the temperature measured by the temperature sensor 1093 to decrease from a value exceeding the threshold to a value lower than or equal to the threshold. The completion period of time may be a predetermined period of time for the fixing unit 109. The completion period of time may be a period of time having a length that varies depending on the temperature measured by the temperature sensor 1093. The completion period of time may be a period of time having a length that varies in consideration of an environmental temperature.

A "Cancel" button on the warning screen is a button for returning to the replacement component selection screen. For example, if the user stops the replacement of the target component, the user presses the "Cancel" button. The control panel 114 displays the replacement component selection screen instead of the replacement guidance screen in response to the pressing of the "Cancel" button. Therefore, even if the user presses the "Cancel" button, the user cannot operate the replacement guidance screen.

A procedure of the display process in the image forming apparatus 100 will be described.

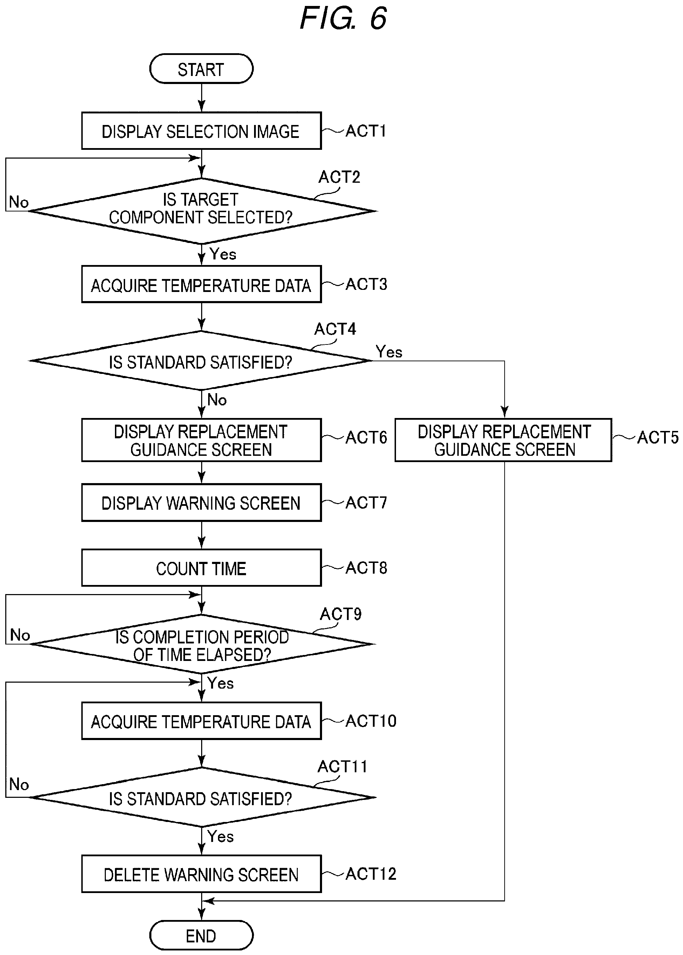

FIG. 6 is a flowchart illustrating the procedure of the display process.

The display control unit 1211 causes the control panel 114 to display the replacement component selection screen (ACT 1). In ACT 1, for example, the display control unit 1211 causes the control panel 114 to display the replacement component selection screen based on a display request by the user through the control panel 114. For example, the display control unit 1211 causes the control panel 114 to display the replacement component selection screen based on detection that the cover is opened by the opening and closing sensor 127.

The display control unit 1211 detects the section of the target component on the replacement component selection screen (ACT 2). In ACT 2, for example, the display control unit 1211 detects the pressing of the "OK" button after the selection of the target component on the replacement component selection screen. If the display control unit 1211 does not detect the selection of the target component (ACT 2, No), the display control unit 1211 continues to detect the selection of the target component. Here, it is assumed that the fixing unit 109 is selected by the user as the target component. The processor 121 stops the supply of power to the target component based on the detection of the selection of the target component. Here, it is assumed that the processor 121 stops the supply of power to the fixing unit 109.

If the display control unit 1211 detects the selection of the fixing unit 109 as the target component (ACT 2, Yes), the acquisition unit 1212 acquires temperature data from the temperature sensor 1093 (ACT 3). In ACT 3, for example, the acquisition unit 1212 activates the temperature sensor 1093 and acquires temperature data at the current time from the temperature sensor 1093. The temperature data acquired from the temperature sensor 1093 is an example of data for detecting the state of the target component.

The determination unit 1213 determines whether or not the state of the fixing unit 109 satisfies the standard (ACT 4). In ACT 4, for example, the determination unit 1213 compares the value of the temperature data acquired from the temperature sensor 1093 to the threshold. If the temperature measured by the temperature sensor 1093 is lower than or equal to the threshold, the determination unit 1213 determines that the state of the fixing unit 109 satisfies the standard. If the temperature measured by the temperature sensor 1093 exceeds the threshold, the determination unit 1213 determines that the state of the fixing unit 109 does not satisfy the standard. As described below, the display control unit 1211 determines whether or not to cause the control panel 114 to display the warning screen in the aspect where the replacement guidance screen is not operable depending on the state of the fixing unit 109.

If the state of the fixing unit 109 satisfies the standard (ACT 4, Yes), the display control unit 1211 causes the control panel 114 to display the replacement guidance screen (ACT 5). In ACT 5, for example, the display control unit 1211 causes the control panel 114 to display the replacement guidance screen regarding the fixing unit 109. If the state of the fixing unit 109 satisfies the standard, the display control unit 1211 causes the control panel 114 not to display the warning screen. Therefore, each of the buttons on the replacement guidance screen that is displayed by the control panel 114 is active. Since the temperature measured by the temperature sensor 1093 is lower than or equal to the threshold, the state of the fixing unit 109 is a state that is suitable for the replacement. The user can replace the fixing unit 109 safely along the display of the replacement guidance screen in a state where there is no risk of burns. After the replacement of the fixing unit 109, the user can press the "Finish" button to complete the replacement of the fixing unit 109.

If the state of the fixing unit 109 does not satisfy the standard (ACT 4, No), the display control unit 1211 causes the control panel 114 to display the replacement guidance screen (ACT 6). In ACT 6, for example, the display control unit 1211 causes the control panel 114 to display the replacement guidance screen regarding the fixing unit 109.

The display control unit 1211 causes the control panel 114 to display the warning screen in the aspect where the replacement guidance screen is not operable (ACT 7). In ACT 7, if the state of the fixing unit 109 does not satisfy the standard, the display control unit 1211 may cause the control panel to display the warning screen. For example, the display control unit 1211 causes the control panel 114 to display the warning screen at the same time as that at which the replacement guidance screen is displayed in ACT 6. As a result, in the image forming apparatus 100, the possibility that the user executes the replacement of the target component can be reduced during a period where the replacement guidance screen is not operable. In the image forming apparatus 100, the possibility that the user executes the replacement of the target component can be reduced, and thus the possibility that the user gets injured, for example, gets burned, can also be reduced during the replacement of the target component.

Further, in ACT 7, the display control unit 1211 displays the warning cancel condition on the warning screen. For example, the display control unit 1211 appropriately sets the completion period of time as described above, and displays the completion period of time or the completion time on the warning screen. If the display control unit 1211 displays the completion period of time, the display control unit 1211 displays the countdown of the remaining time over time. As a result, in the image forming apparatus 100, a time at which the state of the target component satisfies the standard can be notified.

The count unit 1214 counts the time after the display of the warning screen (ACT 8). In ACT 8, for example, the count unit 1214 counts the time using the RTC 126. The count unit 1214 detects that the completion period of time is elapsed after the display of the warning screen (ACT 9). In ACT 9, for example, the count unit 1214 sequentially compares the period of time after the display of the warning screen to the completion period of time. The completion period of time being elapsed after the display of the warning screen corresponds to the current time passing the completion time. If the completion period of time is not elapsed after the display of the warning screen (ACT 9, No), the count unit 1214 continues to detect that the completion period of time is elapsed after the display of the warning screen.

If the completion period of time is elapsed after the display of the warning screen (ACT 9, Yes), the acquisition unit 1212 acquires temperature data from the temperature sensor 1093 (ACT 10). In ACT 10, for example, as in ACT 3, the acquisition unit 1212 activates the temperature sensor 1093 and acquires temperature data at the current time from the temperature sensor 1093. Since the supply of power to the fixing unit 109 is stopped, the temperature measured by the temperature sensor 1093 decreases over time. Therefore, the value of the temperature data acquired from the temperature sensor 1093 in ACT 10 is lower than the value of the temperature data acquired from the temperature sensor 1093 in ACT 3.

The determination unit 1213 determines whether or not the state of the fixing unit 109 satisfies the standard (ACT 11). In ACT 11, for example, as in ACT 4, the determination unit 1213 compares the value of the temperature data acquired from the temperature sensor 1093 to the threshold.

If the state of the fixing unit 109 does not satisfy the standard (ACT 11, No), the process proceeds from ACT 11 to ACT 10. In this case, the display control unit 1211 may extend the completion period of time or the completion time displayed on the warning screen.

If the state of the fixing unit 109 satisfies the standard (ACT 11, Yes), the display control unit 1211 erases the warning screen (ACT 12). In ACT 12, if the state of the fixing unit 109 satisfies the standard after the display of the warning screen, the display control unit 1211 erases the warning screen. For example, in ACT 12, the display control unit 1211 erases the warning screen and causes the control panel 114 to display the replacement guidance screen in the aspect where the replacement guidance screen is operable. Therefore, each of the buttons on the replacement guidance screen that is displayed by the control panel 114 is active. Since the temperature measured by the temperature sensor 1093 is shifted to the threshold or lower, the state of the fixing unit 109 is suitable for the replacement. In the image forming apparatus 100, the replacement guidance screen can be made to be operable at the time at which the state of the fixing unit 109 is suitable for the replacement. The user can replace the fixing unit 109 safely along the display of the replacement guidance screen in a state where there is no risk of burns. After the replacement of the fixing unit 109, the user can press the "Finish" button to complete the replacement of the fixing unit 109.

In order to accelerate the cooling of the fixing unit 109, the processor 121 may rotate a fan (not illustrated) provided near the fixing unit 109. If the determination unit 1213 determines that the state of the fixing unit 109 does not satisfy the standard in ACT 4, the processor 121 may rotate a fan. If the determination unit 1213 determines that the state of the fixing unit 109 does not satisfy the standard in ACT 11, the processor 121 may rotate a fan.

In ACT 10, the acquisition unit 1212 acquires the temperature data from the temperature sensor 1093 at the time at which the completion period of time is elapsed after the display of the warning screen, but the embodiment is not limited thereto. The acquisition unit 1212 may acquire the temperature data intermittently from the temperature sensor 1093 while the completion period of time is counted after the display of the warning screen. In this example, the determination unit 1213 can determine whether or not the state of the fixing unit 109 satisfies the standard whenever the acquisition unit 1212 acquires the temperature data from the temperature sensor 1093. The display control unit 1211 may update the completion period of time or the completion time displayed on the warning screen as needed based on the shift status of the temperature data acquired from the temperature sensor 1093. If the shift status of the value of the temperature data acquired from the temperature sensor 1093 is higher than a predicted curve of a temperature decrease, the processor 121 may rotate a fan.

Here, the fixing unit 109 is described as the example of the target component. However, the same is applicable to a case where another consumable component is used as the target component.

For example, the target component may be a photoconductive drum. In this example, the acquisition unit 1212 can acquire temperature data from a temperature sensor (not illustrated) provided near the photoconductive drum. The temperature data acquired from the temperature sensor provided near the photoconductive drum is an example of data for detecting the state of the photoconductive drum. The temperature sensor provided near the photoconductive drum may be a sensor that measures an environmental temperature in the image forming apparatus 100.

For example, the target component may be a consumable component positioned near the fixing unit 109. In this example, the acquisition unit 1212 acquires temperature data from the temperature sensor 1093. The temperature data acquired from the temperature sensor 1093 is used because there is an effect of heat of the fixing unit 109 during the replacement of a consumable component positioned near the fixing unit 109. The temperature data acquired from the temperature sensor 1093 is an example of data for detecting the state of the consumable component positioned near the fixing unit 109.

In the image forming apparatus 100 according to the embodiment, whether or not to cause the control panel 114 to display the warning screen in the aspect where the replacement guidance screen is not operable is determined depending on the state of the target component. As a result, in the image forming apparatus 100, the replacement guidance screen can be made not to be operable by displaying the warning screen while the state of the target component is not suitable for the replacement. As a result, in the image forming apparatus 100, the replacement guidance screen can be made to be operable by not displaying the warning screen while the state of the target component is suitable for the replacement. In the image forming apparatus 100, the state of the replacement guidance screen can be changed depending on the state of the target component. In the image forming apparatus 100, depending on whether or not the warning screen is displayed, the time of the replacement of the target component corresponding to the state of the target component can be notified while reducing a risk caused by the target component. This way, the image forming apparatus 100 can support the replacement of a component in the image forming apparatus 100 by the user.

Modification examples of the embodiments described herein will be described.

The display control unit 1211 may change whether or not the display of the warning screen is required depending on the kind of the target component. In this example, in the image forming apparatus 100, list data of consumable components that require the display of the warning screen and list data of consumable components that do not require the display of the warning screen may be stored in the auxiliary storage device 124. The list data of consumable components that require the display of the warning screen and the list data of consumable components that do not require the display of the warning screen may be appropriately changed. If the consumable components that require the display of the warning screen are replaced, the user is highly likely to be injured, for example, get burned, due to the effect of heat or the like depending on the states of the consumable components. Examples of the consumable components that require the display of the warning screen include the fixing unit 109. If the consumable components that do not require the display of the warning screen are replaced, the user is less likely to be injured, for example, get burned, due to the effect of heat or the like irrespective of the states of the consumable components. Examples of the consumable components that do not require the display of the warning screen include a consumable component that is not at a high temperature during the operation and a consumable component in which the temperature decreases immediately after stopping the operation.

If a consumable component that requires the display of the warning screen on the replacement component selection screen is selected as the target component, the processor 121 executes ACT 4 to ACT 12 as illustrated in FIG. 6. If a consumable component that does not require the display of the warning screen on the replacement component selection screen is selected as the target component, the processor 121 causes the control panel 114 to display the replacement guidance screen regarding the target component. The processor 121 causes the control panel 114 not to display the warning screen irrespective of the state of the target component. In this case, the determination process of the determination unit 1213 on whether or not the state of the target component satisfies the standard is not necessarily executed.

In the image forming apparatus 100, whether or not the display of the warning screen is required is changed depending on the kind of the target component. Therefore, the replacement guidance screen is operable at a time at which each target component is required to be replaced. The user can efficiently execute component replacement of the image forming apparatus 100.

In general, the image forming apparatus is transferred in a state where a program is stored in a main memory or an auxiliary storage device. However, the embodiment is not limited to this configuration, and the image forming apparatus may be transferred in a state where a program is not stored in a main memory or an auxiliary storage device. In this case, a program that is transferred independently of the image forming apparatus is written into a writable storage device in the image forming apparatus in response to an operation of the user or the like. The program can be transferred by recording the program in a removable recording medium or by communication through a network. The form of the recording medium is not limited as long as the program can store the program and can be read by the image forming apparatus, for example, a CD-ROM or a memory card. In addition, a function that can be implemented by installing or downloading the program may be implemented in cooperation with an operating system (OS) or the like in the image forming apparatus.

While certain embodiments have been described, these embodiments have been presented by way of example only, and are not intended to limit the scope of the present disclosure. Indeed, the embodiments described herein may be embodied in a variety of other forms: furthermore various omissions, substitutions and changes in the form of the embodiments described herein may be made without departing from the spirit of the present disclosure. The accompanying claims and their equivalents are intended to cover such embodiments or modifications as would fall within the scope and spirit of the present disclosure.

## Claims

1. An image forming apparatus comprising:
a printer unit configured to print an image on a sheet, the printer unit comprising a target component;
a display; and
a display controller communicable with the display, the display controller configured to:
cause the display to display a first display element associated with replacement of the target component, the first display element displayed based on a state of the printer unit; and
cause the display to display a second display element associated with a warning for the printer unit, the second display element displayed so as to at least one of block or hide a portion of the first display element, the second display element displayed based on the state;
wherein the portion describes replacement of the target component.

2. The image forming apparatus of claim 1, wherein the display controller is further configured to:
cause the display to display the second display element when the state does not satisfy a standard; and
cause the display to cease display of the second display element when the state satisfies the standard.

3. The image forming apparatus of claim 2, further comprising a temperature sensor configured to sense a temperature of the target component;
wherein the standard is a temperature range;
wherein the state is the temperature; and
wherein the state satisfies the standard when the temperature is within the temperature range.

4. The image forming apparatus of claim 3, wherein:
the target component is a fixing assembly of the printer unit; and
a maximum of the temperature range is a burn temperature of skin.

5. The image forming apparatus of any one of claims 1 to 4, wherein the display controller is further configured to:
cause the display to cease display of the first display element based on the state; and
cause the display to cease display of the second display element based on the state.

6. The image forming apparatus of claim 5, wherein the display controller is further configured to cause the display to cease display of the first display element before causing the display to display the second display element.

7. The image forming apparatus of claim 5 or 6, wherein the display controller is further configured to cause the display to cease display of the second display element before causing the display to display the first display element.

8. The image forming apparatus of any one of claims 1 to 7, wherein the display controller is further configured to:
cause the display to display a condition on the second display element; and
cause the display to cease display of the second display element after displaying the condition.

9. The image forming apparatus of any one of claims 1 to 8, wherein the display is further configured to cause the display to display the second display element based on both the state and a kind of the target component.

10. The image forming apparatus according to claim 1 further comprising:
a fixing assembly;
a temperature sensor configured to sense a temperature of the fixing assembly;
a determination unit communicable with the display and configured to compare the temperature to a temperature range, wherein the controller is further configured to
cause the display to display the first display element when the temperature is within the temperature range; and
cause the display to display the second display element when the temperature is not within the temperature range.

11. The image forming apparatus of claim 10, wherein the display unit is further configured to:
cause the display to cease display of the first display element when the temperature is not within the temperature range; and
cause the display to cease display of the second display element when the temperature is within the temperature range.

12. The image forming apparatus of claim 10 or 11, wherein:
the second display element is displayed so as to at least one of block or hide at least a portion of the first display element; and
the portion describes replacement of the fixing assembly.

13. A display method for an image forming apparatus having a target component, a display, and a display controller, the display method comprising:
causing, by the display controller, the display to display a first display element associated with replacement of the target component, the first display element displayed based on a state of the target component; and
causing, by the display controller, the display to display a second display element associated with a warning for the target component, the second display element displayed so as to at least one of block or hide a portion of the first display element, the portion comprising at least one of text or an image associated with the target component, the second display element displayed based on the state.

14. The display method of claim 13, further comprising:
causing, by the display controller, the display to display the second display element when the state does not satisfy a standard; and
causing, by the display controller, the display to cease display of the second display element when the state satisfies the standard.

15. The display method of claim 13 or 14, further comprising:
causing, by the display controller, the display to cease display of the first display element based on the state; and
causing, by the display controller, the display to cease display of the second display element based on the state.
